# EUROPEAN PATENT SPECIFICATION

(11) **EP 3 333 073 B1**
(45) Date of publication and mention of the grant of the patent: **20.03.2019**
(21) Application number: 17205640.0
(22) Date of filing: 06.12.2017
(51) Int. Cl.: B64C 27/12, F16D 41/07, B64C 29/00

(54) **DRIVETRAIN SUBASSEMBLY HAVING AN INTEGRATED SPRAG CLUTCH RACE AND GEAR SHAFT MEMBER**
ANTRIEBSSTRANGUNTERBAUGRUPPE MIT INTEGRIERTEM FREILAUFKUPPLUNGSLAUFRING UND GETRIEBEWELLENELEMENT
SOUS-ENSEMBLE DE CHAÎNE CINÉMATIQUE AYANT UN CHEMIN DE ROULEMENT D'EMBRAYAGE À ROUE LIBRE INTÉGRÉ ET ÉLÉMENT D'ARBRE D'ENGRENAGE

(30) Priority: 11.12.2016 US 201615375134
(43) Date of publication of application: 13.06.2018
(73) Proprietor: Bell Helicopter Textron Inc., Fort Worth, TX 76101 (US)
(72) Inventor: OLSON, Eric, Fort Worth, TX 76110 (US); BOCKMILLER, David, Fort Worth, TX 76224 (US)
(74) Representative: Barker Brettell LLP

(56) References cited:
- US-A- 5 722 522
- US-A1- 2009 224 096

## Description

### TECHNICAL FIELD

This disclosure generally relates to overrunning sprag clutches for the uni-directional transmission of torque. In one aspect, it relates to an overrunning sprag clutch having an improved output shaft configuration.

US 2009/224,096 discloses systems and methods in which an electrical control system independently effects acceleration of both driven and driving elements of a clutch to engage each other. The clutch is not a friction clutch, but a dog clutch, and forms part of a drive drain of a rotorcraft. A second clutch can be used, along with a mechanical interlock to prevent simultaneous engagement of the clutches. Speeds of the driven and driving elements can be sensed, and altered using at least one of a rotor, a brake, a generator, an electric motor, and a combustion motor. In rotorcraft embodiments, the gearbox can have a neutral condition in which no power is transmitted from the engine to the rotor.

US 5,722,522 discloses an overrunning multiple-row sprag clutch is provided comprising an annular outer race, an inner race positioned concentrically within the outer race to define an annular space therebetween, and two or more discrete annular sprag rows, each having a plurality of discrete sprags, positioned longitudinally adjacent to one another in the annular space. The outer race has a longitudinally varying radial stiffness such that when a torque is applied to the clutch, portions of the outer race radially adjacent to each sprag row are deflected radially outward to compensate for the tiling of the sprags in the sprag row caused by torsional wind up of the inner race, thereby evenly distributing the total torque load between the sprag rows. The variable radial stiffness of the outer race may be provided by an outer race having a tapered outer diameter.

### SUMMARY OF THE INVENTION

According to the present disclosure there is provided a drivetrain subassembly according to claim 1. Optional features are set out in the dependent claims.

### BRIEF DESCRIPTION OF THE DRAWINGS

Embodiments are illustrated by way of example in the accompanying figures, in which like reference numbers indicate similar parts, and in which:
Figure 1 shows a schematic diagram of an example of a tiltrotor aircraft;
Figure 2 shows a schematic diagram of an example of a rotorcraft;
Figure 3 shows a cross-sectional view of an exemplary embodiment of a drive train subassembly according to the present disclosure; and
Figure 4 shows partial a cross-sectional view and partial side view of the drive train subassembly shown in Figure 3.

### DETAILED DESCRIPTION

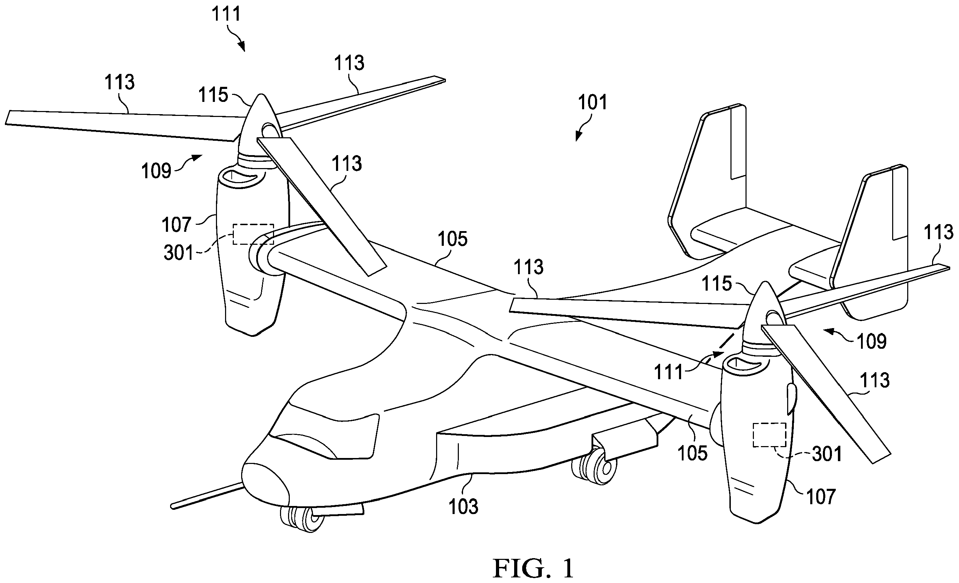

Figure 1 shows a schematic diagram of an example tiltrotor aircraft 101. Aircraft 101 includes a fuselage 103 with attached wings 105. Nacelles 107 are carried at the outboard ends of wings 105 and are rotatable between the helicopter-mode position shown and a forward-facing airplane-mode position (not shown). Nacelles 107 carry engines and transmissions 109 for powering rotor systems 111 in rotation. An engine may be an internal combustion engine, an electrical power source and associated motor, or any other suitable means for powering rotor system 111. Each rotor system 111 is illustrated as having three blades 113. Spinning covers 115 and nacelles 107 substantially enclose transmission 109, obscuring transmission 109 from view in figure 1. The tiltrotor aircraft 101 includes a drive train that includes subassemblies generally indicated at 301 and described below for driving the rotor systems 111. The drive train subassemblies 301 can include gearboxes, shafts, couplings, and respective sprag overrunning one-way clutches as disclosed herein.

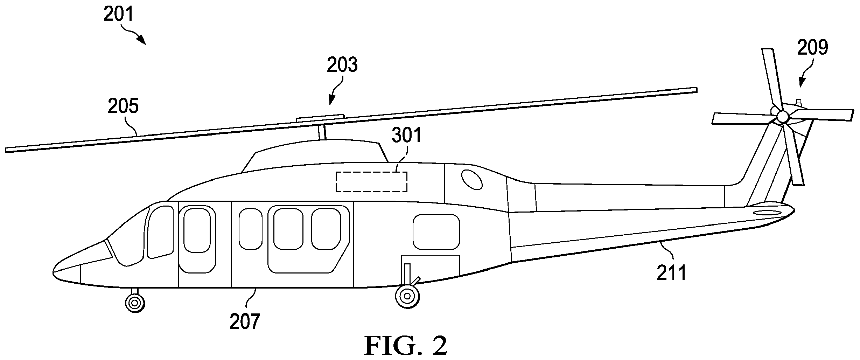

Figure 2 shows a schematic diagram of an example rotorcraft 201, which also constitutes an aircraft. Rotorcraft 201 has a rotor system 203 with multiple rotor blades 205. The pitch of each rotor blade 205 can be manipulated in order to selectively control direction, thrust, and lift of rotorcraft 201. Rotorcraft 201 can further include a fuselage 207, anti-torque system 209, and an empennage 211. The rotorcraft 201 includes a drive train, including a subassembly generally indicated at 301 and described below for driving the rotor system 203. The drive train subassembly 301 can include a gearbox, shafts, couplings, and a sprag clutch.

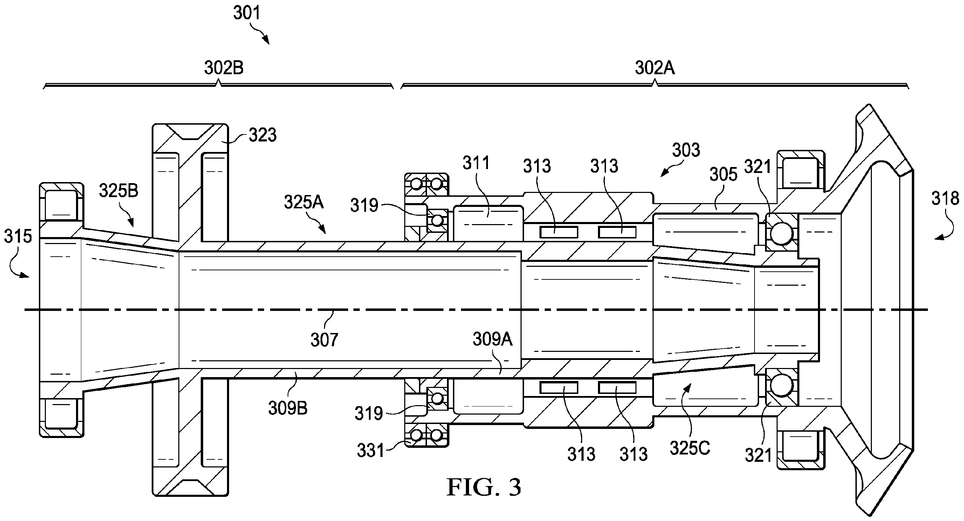

Figure 3 shows a cross-sectional view of an embodiment of a drive train subassembly 301. The drive train subassembly 301 includes a clutch portion 302A and a gear shaft portion 302B. The clutch portion 302A includes a sprag clutch 303. The gear shaft portion 302B includes a gear shaft 309B, which is integrally formed with an inner race 309A of the sprag clutch 303 so as to form an integrated inner race/gear shaft 309A/309B member. The integration of the inner race 309A and the gear shaft 309B can be accomplished by forming the inner race 309A/gear shaft 309B together as a single component. Alternatively, in some embodiments the inner race 309A can be formed separately from the gear shaft 309B, and then inner race 309A and gear shaft 309B can be colinearly fixed together, for example by friction welding, so as to be formed into a single continuous component.

The integration of the output gear shaft 309B with the inner race 309A of the sprag clutch 303 as disclosed herein constitutes an example of a deviation from prior drive train assemblies. Traditionally, an output gear shaft would be a separate component from a sprag clutch. The sprag clutch would typically be connected to the output gear shaft via another component, such as a dog-bone shaft, that allows for axial misalignments between the output gear shaft and the sprag clutch. However, integration of the inner race 309A and the output gear shaft 309B into a single shaft component reduces parts count, weight, and complexity, which is desirable for aircraft applications.

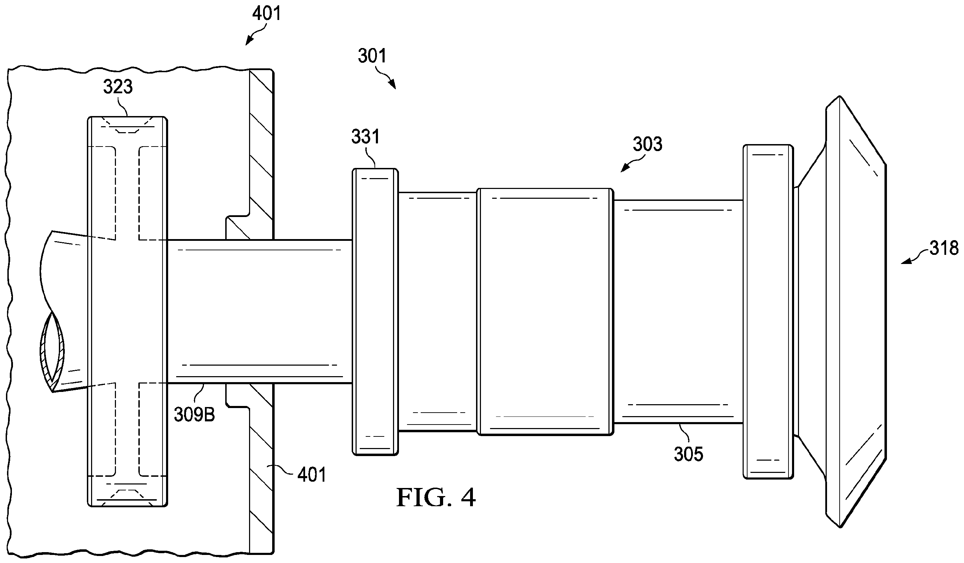

The sprag clutch 303 includes an outer race 305 having a longitudinal axis 307 therethrough, with the inner race 309A positioned concentrically within the outer race 305. An annular space 311 is therefore present between the inner race 309A and the outer race 305. One or more annular sprag rows 313 are positioned in the annular space 311 radially between the inner race 309A and the outer race 305. The exact number and configuration of sprags is determined according to principles known in the art for designing sprag clutches. Outer race 305 is adapted for connection to an input shaft (not shown) at an input end 318. For example, the input end 318 of the outer race 305 can be a gear, such as a spiral bevel gear in the illustrated embodiment (note that the gear teeth are not shown in Figure 4 for simplicity of the view), or can be provided with internal and/or external crowned splines (not shown) which can receive torque from the input shaft. Outer race 305 can be adapted for connection to an input shaft using any one of a variety of known mechanical connections. The integrated inner race 309A and gear shaft 309B has an output end 315 at a distal end of the output gear shaft 309B.

The clutch portion 302A includes a pair of overrunning bearings 319, 321 positioned radially between the outer race 305 and the inner race 309A of the sprag clutch 303. The first bearing 319 of the pair is positioned axially between the output end 315 and the sprag rows 313. The second bearing 321 is positioned axially on the opposite side of the sprag rows 313 from the output end 315.

The sprag clutch 303 can be used in a variety of rotorcraft designs to transfer power from an engine to rotor system. In the illustrated embodiment, a duplex bearing assembly 331 is provided for supporting the subassembly 301 in the axial direction. Alternative embodiments can include a single-row bearing in place of the duplex bearing assembly 331, depending on the input to the input end 318. In the illustrated embodiment, the duplex bearing assembly 331 is desirable because it provides for more exact axial positioning than a single-row bearing, which is desirable for use with the spiral bevel gear on the input end 318. The configuration and location of the bearing assembly 331 can vary depending on the loading induced by the configuration of the outer race 305 and the gear shaft 309B. Also, depending on the input and output drive arrangements of the particular aircraft drivetrain, the loads on the bearings 331 can be modified such that the subassembly 301 can be held radially between roller bearings and axially with the duplex bearing assembly 331.

In the event of an engine failure, the sprag clutch 303 allows the rotor system to continue to rotate faster than the engine so that the rotorcraft can perform an autorotation. In rotorcraft with more than one engine, the clutch is also used to allow one engine to be started up before the other engine(s). The input end of outer race 305 and output end 315 of the integrated inner race 309A and the gear shaft 309B are positioned at opposite ends of the longitudinal axis 307. When the sprag clutch 303 is engaged and in driving mode, the outer race 305 and the integrated inner race 309A and gear shaft 309B rotate together as single shaft. However, in the event of an engine failure, the sprag clutch 303 is disengaged and allows the integrated inner race 309A and gear shaft 309B to rotate faster than the outer race 305 in order to allow for autorotation.

Referring now also to Figure 4, the gear shaft portion 302B of the drive train subassembly 301 can extend into a downstream component of the drivetrain. For example, in the illustrated embodiment, the gear shaft 309B extends into a gearbox 401. Since the gear shaft 309B is integrally formed with the inner race 309A of the sprag clutch 303, the inner race 309A is part of a single continuous component that also serves as the gear shaft 309B that extends into the gearbox 401 for transmitting torque to downstream drivetrain components. The integrated inner race 309A and gear shaft 309B can be formed of metal, such as hardened steel, or can be formed of composite or ceramic material.

An output gear 323 is formed on the gear shaft 309B between the sprag clutch 303 and the output end 315. For example, in the illustrated embodiment the output gear 323 is a helical gear, but other types of gears can be used depending on the drivetrain configuration. Also, while the illustrated embodiment includes an integrally formed output gear 323, alternative embodiments can include an output gear that is a separate component that is attached to the gear shaft 309B. It will also be appreciated that the gear shaft 309B can be provided with additional components (not shown) within the gearbox 401, such as one or more bearings, flanges, and retaining nuts.

The embodiment of the integrated inner race 309A and the gear shaft 309B includes a generally cylindrical portion 325A that extends from within the sprag rows 313 to the output gear 323. The integrated inner race 309A and the gear shaft 309B further includes a pair of frustoconical portions 325B and 325C. The first frustoconical portion 325B extends from the output gear 323 away from the input end 318 such that the outside diameter of the first frustoconical portion 325B increases as it extends away from the output gear 323. The second frustoconical portion 325C extends from the sprag rows 313 to the bearing 321 such that the outside diameter of the second frustoconical portion 325C decreases from the sprag rows 313 to the bearing 321. However, it will be appreciated that the shape of the integrated inner race 309A and the gear shaft 309B can differ from the illustrated embodiment as desired to accommodate different drivetrain configurations.

While various embodiments in accordance with the principles disclosed herein have been described above, it should be understood that they have been presented by way of example only, and are not limiting. Thus, the breadth and scope of the claims should not be limited by any of the above-described exemplary embodiments, but should be defined only in accordance with the claims. Furthermore, the above advantages and features are provided in described embodiments, but shall not limit the application of such issued claims to processes and structures accomplishing any or all of the above advantages. Also, the phrases "at least one of A, B, and C" and "A and/or B and/or C" should each be interpreted to include only A, only B, only C, or any combination of A, B, and C.

## Claims

1. A drivetrain subassembly (301) comprising:
a clutch portion (302A) including a sprag clutch (303) having an inner race that is configured to rotate about a longitudinal axis; and
a gear shaft portion (302B) including a gear shaft (309B) integrally formed with the inner race (309A) of the sprag clutch (303) so as to form an integrated inner race/gear shaft (309A/309B) member,
wherein the integrated inner race/gear shaft (309A/309B) member is configured to rotate about the longitudinal axis (307) for transmitting torque from the sprag clutch (303) to a downstream drivetrain component;
wherein an output gear (323) is formed on the gear shaft (309B) such that the sprag clutch (303) is between the output gear (323) and an input end (318) of the integrated inner race/gear shaft (309A/309B) member; and
where the integrated inner race/gear shaft (309A/309B) member comprises a first frustoconical portion (325B) which extends from the output gear (323) away from the input end (318) such that the outside diameter of the first frustoconical portion (325B) increases as it extends away from the output gear (323).

2. An aircraft (101; 201) comprising:
a rotor system (111; 203); and
the drivetrain subassembly (301) of claim 1, wherein the drivetrain subassembly (301) is configured to transmit torque to the rotor system (111; 203).

3. The subassembly (301) of claim 1 or of claim 2, wherein the sprag clutch (303) further comprises an outer race (305), wherein the inner race (309A) is positioned concentrically within the outer race (305).

4. The subassembly (301) of claim 3, wherein the sprag clutch (303) further comprises at least one sprag row (313) between the inner race (309A) and the outer race (305).

5. The subassembly (301) of claim 1 or of any preceding claim, wherein the clutch portion (302A) further comprises a first bearing (319) positioned between the outer race (305) and the inner race (309A) of the sprag clutch (303).

6. The subassembly (301) of claim 5, wherein the clutch portion (302A) further comprises a second bearing (321) positioned between the outer race (305) and the inner race (309A) of the sprag clutch (303).

7. The subassembly (301) of claim 6, wherein the sprag clutch (303) further comprises at least one sprag row (313) radially disposed between the inner race (309A) and the outer race (305) and axially disposed between the first and second bearings (319, 321).

8. The subassembly (301) of claim 1, wherein the gear shaft (309B) extends from the sprag clutch (303) to within a gearbox (401).

9. The subassembly (301) of claim 1, wherein the output gear (323) is disposed within the gearbox (401).

10. The subassembly (301) of claim 1, wherein the output gear (323) is a helical gear.

## Patentansprüche

1. Antriebsstrangunterbaugruppe (301), umfassend:
einen Kupplungsabschnitt (302A), der eine Freilaufkupplung (303) beinhaltet, die einen Innenlaufring aufweist, der dazu gestaltet ist, sich um eine Längsachse zu drehen; und
einen Getriebewellenabschnitt (302B), der eine Getriebewelle (309B) beinhaltet, die einstückig mit dem Innenlaufring (309A) der Freilaufkupplung (303) ausgebildet ist, um ein durchgängiges Innenlaufring-/Getriebewellenelement (309A/309B) auszubilden,
wobei das durchgängige Innenlaufring-/Getriebewellenelement (309A/309B) dazu gestaltet ist, sich um die Längsachse (307) zu drehen, um Drehmoment von der Freilaufkupplung (303) auf eine stromabwärtige Antriebsstrangkomponente zu übertragen;
wobei an der Getriebewelle (309B) ein Abtriebsrad (323) so ausgebildet ist, dass sich die Freilaufkupplung (303) zwischen dem Abtriebsrad (323) und einem Eingangsende (318) des durchgängigen Innenlaufring-/Getriebewellenelements (309A/309B) befindet; und
wobei das durchgängige Innenlaufring-/Getriebewellenelement (309A/309B) einen ersten kegelstumpfförmigen Abschnitt (325B) umfasst, der sich vom Abtriebsrad (323) weg vom Eingangsende (318) so erstreckt, dass der Außendurchmesser des ersten kegelstumpfförmigen Abschnitts (325B) zunimmt, während er sich vom Abtriebsrad (323) weg erstreckt.

2. Flugzeug (101; 201), umfassend:
ein Rotorsystem (111; 203) und
die Antriebsstrangunterbaugruppe (301) nach Anspruch 1, wobei die Antriebsstrangunterbaugruppe (301) dazu gestaltet ist, Drehmoment auf das Rotorsystem (111; 203) zu übertragen.

3. Unterbaugruppe (301) nach Anspruch 1 oder Anspruch 2, wobei die Freilaufkupplung (303) ferner einen Außenlaufring (305) umfasst, wobei der Innenlaufring (309A) konzentrisch innerhalb des Außenlaufrings (305) positioniert ist.

4. Unterbaugruppe (301) nach Anspruch 3, wobei die Freilaufkupplung (303) ferner zumindest eine Freilaufreihe (313) zwischen dem Innenlaufring (309A) und dem Außenlaufring (305) umfasst.

5. Unterbaugruppe (301) nach Anspruch 1 oder einem der vorangehenden Ansprüche, wobei der Kupplungsabschnitt (302A) ferner ein erstes Lager (319) umfasst, das zwischen dem Außenlaufring (305) und dem Innenlaufring (309A) der Freilaufkupplung (303) positioniert ist.

6. Unterbaugruppe (301) nach Anspruch 5, wobei der Kupplungsabschnitt (302A) ferner ein zweites Lager (321) umfasst, das zwischen dem Außenlaufring (305) und dem Innenlaufring (309A) der Freilaufkupplung (303) positioniert ist.

7. Unterbaugruppe (301) nach Anspruch 6, wobei die Freilaufkupplung (303) ferner zumindest eine Freilaufreihe (313) umfasst, die radial zwischen dem Innenlaufring (309A) und dem Außenlaufring (305) angeordnet und axial zwischen dem ersten und dem zweiten Lager (319, 321) angeordnet ist.

8. Unterbaugruppe (301) nach Anspruch 1, wobei sich die Getriebewelle (309B) von der Freilaufkupplung (303) bis in ein Getriebegehäuse (401) erstreckt.

9. Unterbaugruppe (301) nach Anspruch 1, wobei das Abtriebsrad (323) innerhalb des Getriebegehäuses (401) angeordnet ist.

10. Unterbaugruppe (301) nach Anspruch 1, wobei das Abtriebsrad (323) ein Schrägzahnrad ist.

## Revendications

1. Sous-ensemble de chaîne cinématique (301), comprenant:
une partie d'embrayage (302A) comprenant un embrayage à roue libre (303) présentant un chemin de roulement intérieur qui est configuré de manière à tourner autour d'un axe longitudinal; et
une partie d'arbre d'engrenage (302B) comprenant un arbre d'engrenage (309B) formé intégralement avec le chemin de roulement intérieur (309A) de l'embrayage à roue libre (303) de manière à former un élément intégré de chemin de roulement intérieur/arbre d'engrenage (309A/309B),
dans lequel l'élément intégré de chemin de roulement intérieur/arbre d'engrenage (309A/309B) est configuré de manière à tourner autour de l'axe longitudinal (307) afin de transmettre un couple à partir de l'embrayage à roue libre (303) à un composant de chaîne cinématique situé en aval;
dans lequel un engrenage de sortie (323) est formé sur l'arbre d'engrenage (309B) de telle sorte que l'embrayage à roue libre (303) soit situé entre l'engrenage de sortie (323) et une extrémité d'entrée (318) de l'élément intégré de chemin de roulement intérieur/arbre d'engrenage (309A/309B); et
dans lequel l'élément intégré de chemin de roulement intérieur/arbre d'engrenage (309A/309B) comprend une première partie tronconique (325B) qui s'étend à partir de l'engrenage de sortie (323) à l'écart de l'extrémité d'entrée (318) de telle sorte que le diamètre extérieur de la première partie tronconique (325B) augmente au fur et à mesure qu'il s'éloigne de l'engrenage de sortie (323).

2. Aéronef (101; 201), comprenant:
un système de rotor (111; 203); et
le sous-ensemble de chaîne cinématique (301) selon la revendication 1, dans lequel le sous-ensemble de chaîne cinématique (301) est configuré de manière à transmettre un couple au système de rotor (111; 203).

3. Sous-ensemble (301) selon la revendication 1 ou la revendication 2, dans lequel l'embrayage à roue libre (303) comprend en outre un chemin de roulement extérieur (305), dans lequel le chemin de roulement intérieur (309A) est positionné de façon concentrique à l'intérieur du chemin de roulement extérieur (305).

4. Sous-ensemble (301) selon la revendication 3, dans lequel l'embrayage à roue libre (303) comprend en outre au moins une rangée à roue libre (313) entre le chemin de roulement intérieur (309A) et le chemin de roulement extérieur (305).

5. Sous-ensemble (301) selon la revendication 1 ou l'une quelconque des revendications précédentes, dans lequel la partie d'embrayage (302A) comprend en outre un premier palier (319) qui est positionné entre le chemin de roulement extérieur (305) et le chemin de roulement intérieur (309A) de l'embrayage à roue libre (303).

6. Sous-ensemble (301) selon la revendication 5, dans lequel la partie d'embrayage (302A) comprend en outre un second palier (321) qui est positionné entre le chemin de roulement extérieur (305) et le chemin de roulement intérieur (309A) de l'embrayage à roue libre (303).

7. Sous-ensemble (301) selon la revendication 6, dans lequel l'embrayage à roue libre (303) comprend en outre au moins une rangée à roue libre (313) qui est disposée radialement entre le chemin de roulement intérieur (309A) et le chemin de roulement extérieur (305) et qui est disposée axialement entre les premier et second paliers (319, 321).

8. Sous-ensemble (301) selon la revendication 1, dans lequel l'arbre d'engrenage (309B) s'étend à partir de l'embrayage à roue libre (303) jusqu'à l'intérieur d'une boîte de vitesses (401).

9. Sous-ensemble (301) selon la revendication 1, dans lequel l'engrenage de sortie (323) est disposé à l'intérieur de la boîte de vitesses (401).

10. Sous-ensemble (301) selon la revendication 1, dans lequel l'engrenage de sortie (323) est un engrenage hélicoïdal.
